# FASCICULE DE BREVET EUROPEEN

(11) **EP 0 686 325 B1**
(45) Date de publication et mention de la délivrance du brevet: **05.02.1997**
(21) Numéro de dépôt: 94907609.5
(22) Date de dépôt: 23.02.1994
(51) Int. Cl.: H04B 7/26, H04Q 7/30

(54) **PROCEDE DE GESTION DES ERREURS DE TRANSMISSION ENTRE UNE STATION DE BASE ET UN TRANSCODEUR DANS UN SYSTEME DE RADIOCOMMUNICATION NUMERIQUE, STATION DE BASE ET TRANSCODEUR CORRESPONDANTS**
VERFAHREN ZUR FEHLERVERWALTUNG ZWISCHEN EINER FESTSTATION UND EINEM TRANSCODER IN EINER DATENFUNKÜBERTRAGUNGSANORDNUNG
PROCESS FOR THE MANAGEMENT OF TRANSMISSION ERRORS BETWEEN A BASE STATION AND A TRANSCODER IN A DIGITAL RADIOCOMMUNICATION SYSTEM, CORRESPONDING BASE STATION AND TRANSCODER

(30) Priorité: 26.02.1993 FR 9302309
(43) Date de publication de la demande: 13.12.1995
(73) Titulaire: ALCATEL MOBILE COMMUNICATION FRANCE, 75008 Paris (FR)
(72) Inventeur: DUPUY, Pierre, F-75014 Paris (FR); CRUCHANT, Laurent, F-92500 Rueil-Malmaison (FR); JARVIS, André, F-78380 Bougival (FR); POIRAULT, Jean-Philippe, F-92000 Bois-Colombe (FR)
(74) Mandataire: Renaud-Goud, Thierry
(86) Numéro de dépôt international: FR9400199
(87) Numéro de publication internationale: WO9419878

(56) Documents cités:
- EP-A- 0 448 015
- EP-A- 0 462 728
- EP-A- 0 489 993

## Description

Le domaine de l'invention est celui de la radiocommunication cellulaire numérique. Plus précisément, l'invention concerne la gestion des erreurs de transmission entre une station de base (ou BTS : en anglo-saxon "Base Transceiver Station"(Station de base émettrice/réceptive) et un transcodeur (ou TRAU : en anglo-saxon "Transcoder/Rate Adaptor Unit" (unité d'Adaptation de débit et de transcodage)).

Le document EP-A-0 489 993 fait référence à un transcodeur situé entre un site de commutation (MSC) et un site cellulaire (Transmitter).

Les systèmes de radiocommunication cellulaire reposent sur la division d'un territoire géographique en petites portions, ou cellules, desservies chacune par une ou plusieurs stations de base. Ce découpage en cellules permet d'optimiser l'utilisation du spectre radioélectrique, plusieurs cellules pouvant utiliser la même portion de spectre.

Chaque station de base peut communiquer, par voie hertzienne, avec une pluralité de mobiles circulant dans sa cellule. Par ailleurs, les stations de base sont reliées à un centre de commutation (ou MSC : en anglo-saxon : "Mobile Switching Center" (Centre de Commutation avec les Mobiles)), qui assure la connexion entre un mobile et un terminal distant (qui est par exemple un abonné du réseau commuté ou un autre mobile). Le centre de commutation et la station de base sont interconnectés par l'intermédiaire d'une ligne PCM (Pulse Coded Modulation (Modulation par Impulsions Codées)).

Le coût d'utilisation d'une ligne PCM est très élevé. Il est donc souhaitable d'optimiser l'utilisation de cette ligne. Pour ce faire, on insère généralement un transcodeur (ou TRAU) entre les stations de base et le centre de commutation, de façon que les échanges de données (qu'il s'agisse effectivement de données ou de parole) entre une station de base et le transcodeur soit comprimées.

Ainsi, le transcodeur d'une part, la station de base d'autre part, comprennent des moyens de compression et de décompression. Le débit d'une communication peut par exemple être ramené de 64 kbits/s à 16 kbits/s, dans le cas du système GSM (Groupe Spécial Mobile) auquel s'applique avantageusement l'invention. Le gain obtenu dans ce cas est donc d'un facteur 4.

De façon que le gain soit optimal, il est souhaitable que la compression ait lieu sur la plus longue distance possible. Ainsi, en général, le transcodeur est implanté directement sur le même site que le centre de commutation.

Dans tout système de communication, des erreurs de transmission peuvent apparaître, pour des raisons multiples (coupure d'une ligne, perturbations extérieures, pannes...). La liaison entre un transcodeur et une station de base n'échappe pas à cette règle. En conséquence, il est nécessaire de détecter et gérer ces erreurs de transmission.

Dans le système de radiocommunication GSM, la gestion des erreurs s'effectue de la façon suivante:
- si la station de base détecte une perte de synchronisation pendant une seconde, elle transmet une alarme vers un contrôleur BSC (Base Station Controller: contrôleur de station de base) dont dépend la station de base, et qui décide alors de couper la communication ;
- si le transcodeur détecte une perte de synchronisation pendant une seconde, il cesse d'émettre, pour transmettre ue alarme d'urgence (conformément à la recommandation GSM 08-60). A la réception de cette alarme, la station de base alerte le contrôleur BSC dont ele dépend, qui décide alors de couper la communication.

Ce procédé présente deux inconvénients majeurs.

Tout d'abord, le transcodeur est obligé de couper l'envoi de données pour indiquer un problème de transmission. Or, cette interruption peut s'avérer superflue. Il n'est en effet pas rare qu'une communication ne soit perturbée que dans un sens de transmission. Ainsi, ce n'est pas parce que le transcodeur détecte des perturbations dans le sens montant (de la station de base vers le transcodeur) que la liaison est perturbée dans le sens descendant (du transcodeur vers la station de base). Dans ce cas, il est inutile, et même non souhaitable, d'interrompre l'émission de données vers la station de base.

Par ailleurs, il apparaît que la durée de la temporisation (1 seconde) avant de conclure à une perte de synchronisation est trop faible pour de nombreux opérateurs (par exemple lorsque le réseau utilisé est de qualité moyenne ou mauvaise). Il est donc souhaitable que cette valeur soit paramétrable.

Cela pose peu de problèmes pour les stations de base, dans lesquelles les logiciels d'exploitation sont téléchargés. En revanche, les logiciels des transcodeurs sont classiquement stockés en mémoire morte, et donc non téléchargeables. La modification de la durée de temporisation impose donc le changement de la mémoire du transcodeur, ce qui représente une opération coûteuse.

Une autre possibilité consiste à prévoir un message de configuration du transcodeur pour modifier cette durée de temporisation. Mais, outre qu'elle impose la définition d'un nouveau message vers le transcodeur, cette possibilité impose une durée de temporisation identique quelle que soit la BTS à laquelle le transcodeur sera connecté. Ceci présente des inconvénients lorsque la qualité des PCM entre un contrôleur BSC et les différentes BTS qu'il contrôle n'est pas constante.

L'invention a pour objectif de pallier ces différents inconvénients de l'état de la technique.

Plus précisément, un objectif de l'invention est de fournir un procédé de gestion des erreurs de transmission entre un transcodeur et une station de base, dans un système de radiocommunication numérique ne nécessitant pas d'interruption de l'émission du transcodeur, lorsque celui-ci détecte des erreurs de transmission.

Un autre objectif de l'invention est de fournir un tel procédé, qui permette de contrôler la durée de la temporisation mise en oeuvre pour décider d'une perte de synchronisation.

L'invention a également pour objectif de fournir un tel procédé, ne nécessitant pas de traitement complexe ni dans la station de base, ni dans le transcodeur. En particulier, un objectif de l'invention est de fournir un procédé dans lequel aucun paramétrage n'est nécessaire dans le transcodeur.

Encore un autre objectif de l'invention est de fournir un tel procédé, qui soit compatible avec les spécifications du GSM, et notamment qui ne nécessite pas de modification sensible de la trame GSM telle qu'elle est définie par la norme.

Ces objectifs, ainsi que d'autres qui apparaîtront par la suite, sont atteints selon l'invention à l'aide d'un procédé de gestion des erreurs de transmission entre une station de base et un transcodeur, dans un système de radiocommunication numérique avec des mobiles, ledit système comprenant une pluralité de stations de base contrôlant chacune une pluralité de mobiles par voie hertzienne,
un signal transitant entre un mobile et un terminal distant (sens montant) :
- dudit mobile vers une station de base, par voie hertzienne,
- de ladite station de base vers un transcodeur, sous la forme de trames de données comprenant des données de contrôle et des données utiles, lesdites données utiles étant codées selon un codage connu de ladite station de base et dudit transcodeur,
- dudit transcodeur vers un centre de commutation assurant la connexion avec ledit terminal distant,
   et symétriquement dudit terminal distant vers ledit mobile (sens descendant),
   ledit transcodeur effectuant les opérations suivantes :
- réception et décodage des trames transmises par ladite station de base ;
- détection des erreurs de transmission dans le sens montant, par analyse des trames reçues et décodées ; et
- en présence d'une erreur de transmission dans le sens montant, insertion systématique d'un message d'erreur dans une trame destinée à ladite station de base, sans interruption de l'émission de données utiles vers ladite station de base ; et
- interruption de l'émission de données vers ladite station de base, sur détection d'une demande d'interruption de l'émission dans le sens montant générée par ladite station de base ;
   et ladite station de base effectuant les opérations suivantes :
- réception et décodage des trames transmises par ledit transcodeur ;
- détection des erreurs de transmission dans le sens descendant, par analyse des trames reçues et décodées ;
- interruption de l'émission de données vers ledit transcodeur (sens descendant) et génération d'une demande d'interruption de l'émission dans le sens montant, lorsque les erreurs de transmission détectées dans le sens descendant et/ou signalées par un message d'erreur dans le sens montant remplissent des conditions prédéterminées.

Ainsi, l'ensemble des décisions d'interruption d'une communication est centralisé dans la station de base, que les erreurs de transmission soient détectées par le transcodeur ou la station de base. Tant qu'il n'a pas reçu d'ordre d'interruption, le transcodeur maintient l'émission de données (relation maître/esclave, le transcodeur étant l'esclave).

Avantageusement, ladite opération de détection d'erreurs comprend une étape de détection de perte de synchronisation dans lesdites données reçues et décodées.

Dans le cas du GSM, il s'agit de la reconnaissance des bits de synchronisation répartis dans chaque trame.

Dans un mode de réalisation préférentiel de l'invention ladite opération d'insertion d'un message d'erreur consiste à modifier la valeur d'au moins un élément binaire de contrôle d'une desdites trames.

S'il s'agit d'une trame GSM, il peut s'agir de l'un des éléments binaires C12 à C15, qui sont actuellement disponibles.

Ainsi, la structure de la trame n'est pas modifiée, et l'émission de données n'est pas perturbée.

Préférentiellement, ladite station de base met en oeuvre deux compteurs, un premier compteur comptabilisant le nombre d'erreurs dans le sens montant sur un premier laps de temps prédéterminé, et un second compteur comptabilisant le nombre d'erreurs dans le sens descendant sur un second laps de temps prédéterminé, et ladite station de base décide l'interruption d'une communication lorsque la valeur de l'un au moins desdits compteurs dépasse un seuil prédéterminé.

La station de base peut de cette façon gérer les deux types d'erreur, sans grande augmentation de la complexité du traitement.

Avantageusement, ledit premier et/ou ledit second laps de temps prédéterminés ont des durées paramétrables. Ladite durée paramétrable peut être différente pour chaque station de base (17), qu'elles soient ou non contrôlées par un même contrôleur BSC.

Ainsi, la gestion des erreurs peut être adaptée à différents opérateurs. Le logiciel des stations de base étant généralement téléchargeable, il est aisé de modifier cette valeur de temporisation.

Dans un mode de réalisation avantageux, déjà prévu par le GSM (p.16, §4.3, point i de la rec 08.60), ledit transcodeur interrompt une communication en cours lorsqu'il reçoit une trame qu'il a émise lui-même.

Le transcodeur peut également interrompre la communication en effectuant les opérations suivantes :
- comptage du nombre d'erreurs apparaissant dans un troisième laps de temps prédéterminé ;
- activation d'une horloge d'alarme, lorsque ledit nombre d'erreurs est supérieur à un seuil prédéterminé ; et
- interruption de la communication, si ladite horloge d'alarme atteint une valeur de temporisation prédéterminé et si ledit transcodeur reçoit un message d'interruption de la communication.

L'invention concerne également les transcodeurs et les stations de base mettant en oeuvre le procédé décrit ci-dessus.

D'autres caractéristiques et avantages de l'invention apparaîtront à la lecture du mode de réalisation préférentiel suivant, donné à titre de simple exemple illustratif et non limitatif, et des dessins annexés, dans lesquels :
- la figure 1 illustre la structure d'un réseau de radiocommunication cellulaire, tel qu'un réseau GSM, connue en soi ;
- la figure 2 est un diagramme d'état présentant le fonctionnement d'un transcodeur (TRAU) selon le procédé de l'invention ;
- la figure 3 est un synoptique d'état simplifié présentant le fonctionnement d'une station de base (BTS) selon l'invention.

Le mode de réalisation décrit ci-dessous s'applique au système de radiocommunication GSM, et plus précisément au GSM de génération 2 (et plus), actuellement en cours de développement. Il est clair toutefois que l'invention peut également s'appliquer à d'autres systèmes de radiocommunication.

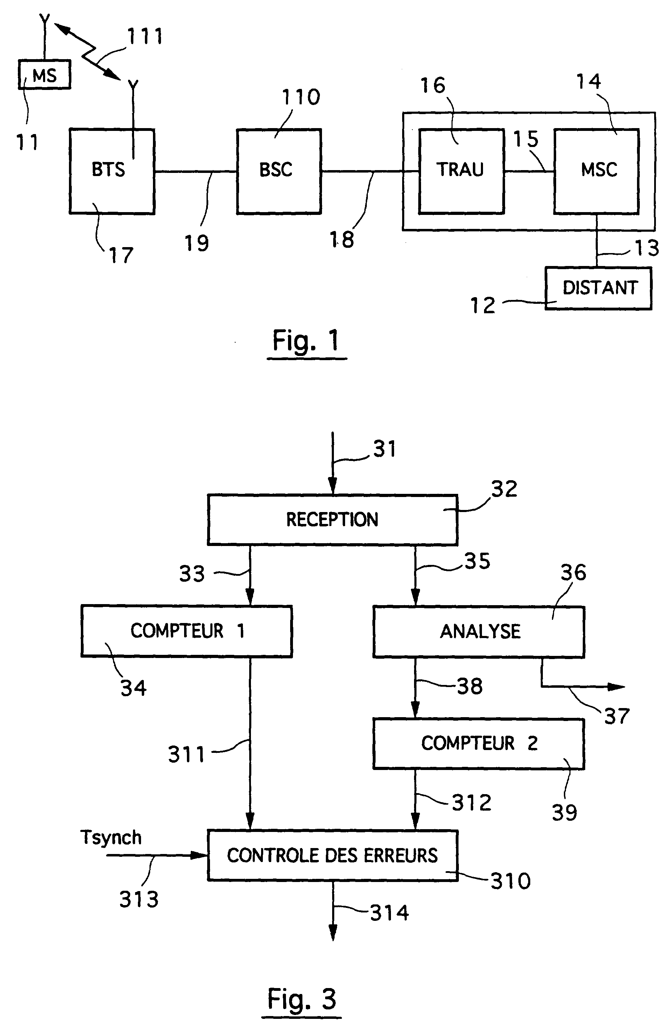

La figure 1 illustre de façon schématique les différents éléments mis en oeuvre pour une communication entre un mobile (MS) 11 et un abonné distant 12, dans le cas du GSM.

On considère le cas d'un signal de parole. Le terminal distant est un appareil téléphonique classique, qui utilise le réseau téléphonique commuté (RTC) 13. Il est connecté à un centre de commutation avec les mobiles (MSC) 14, qui a un double rôle :
- il gère les communications (de façon transparente pour le terminal distant) . En particulier, il alloue un canal de transmission à une communication, puis informe la station de base de l'existence d'une communication ;
- il numérise le signal analogique de parole reçu du terminal distant, à la fréquence de 8 kHz (et, dans l'autre sens de communication, il effectue la conversion numérique/analogique symétrique).

Le signal numérique 15 est transmis, au débit de 64 kbit/s, à un transcodeur (TRAU) 16, qui effectue une compression de la parole. Cette compression permet de ramener le débit d'une communication de 64 kbit/s à 13 kbit/s. Dans la pratique, on alloue 16 kbit/s à une communication (3 kbit/s étant réservés pour le transport d'informations diverses). On obtient donc une compression d'un facteur 4.

La nécessité d'une telle compression s'explique par le fait que le centre de commutation 14 et une station de base (BTS) 17 sont reliés par une ligne PCM 18,19 (fonctionnant par exemple à 2048 kbit/s). Or le coût d'utilisation de telles lignes PCM est très élevé. Il est donc nécessaire de comprimer les données et de multiplexer plusieurs communications, pour optimiser l'utilisation des lignes PCM.

Classiquement, une ligne PCM à 2048 kbit/s est découpée en 32 canaux à 64 kbit/s, comprenant 31 canaux de parole (échantillonnée à 8 kHz) ou de signalisation et un canal de contrôle du PCM, utilisé pour contrôler le bon fontionnement du PCM. La compression permet donc de faire passer 4 communications dans chaque canal.

Le transcodeur 16 est en pratique relié à un contrôleur 110 de stations de base, par une première ligne PCM 18, puis à la station de base 17 par une seconde ligne PCM 19. Le rôle du contrôleur 110 est essentiellement d'assurer les connexions. Il est transparent vis-à-vis des communications.

Le réseau GSM utilise en effet une structure arborescente, comprenant pour un territoire donné (par exemple un pays) quelques centres de commutation (par exemple une dizaine). Chaque centre de commutation contrôle un ensemble de contrôleurs de stations de base. Chaque contrôleur gère une pluralité de stations de base, qui contrôlent chacune plusieurs mobiles (par exemple une soixantaine).

Enfin, la station de base 17 communique avec le mobile 11 par voie hertzienne.

Le cheminement des données est fait bien sûr symétriquement dans le sens mobile 11 vers le terminal distant 12 (appelé sens montant, par convention, le sens décrit précédemment étant le sens descendant (vu du mobile).

De même, la transmission de données est réalisée de façon similaire.

L'invention concerne spécifiquement la gestion des erreurs de transmission sur les lignes PCM 18, 19, entre la station de base 17 et le transcodeur 16.

Actuellement, (dans le système de première génération) cette gestion est effectuée de la façon suivante :
- dans le sens montant : si une erreur de transmission est détectée par le transcodeur pendant une durée d'une seconde, celui-ci cesse d'émettre des données vers la station de base, pour émettre un "message urgent", constitué d'une série de zéros consécutifs.

La station de base détecte cette alarme urgent, et en informe le contrôleur BSC, qui décide d'interrompre la communication et qui retourne alors au transcodeur les trames que celui-ci émet. Lorsqu'il reconnaît les trames qu'il a émis, le transcodeur coupe la communication;
- dans le sens descendant : quand une erreur de transmission est détectée par la station de base, celle-ci décide d'interrompre la communication, de la façon décrite ci-dessus.

Il existe également une autre méthode pour interrompre une communication : la station de base peut émettre des données de bourrage (ou "idle pattern", en anglo-saxon) constituées de séquences "01" successives. Le transcodeur reconnaissant ces données de bourrage décide l'interruption de la communication.

Les erreurs de transmission peuvent par exemple être dues à des trains d'erreurs ("bursts" en anglo-saxon), du bruit (erreurs aléatoires) ou des coupures (par exemple lorsque l'on bascule d'un appareil à un autre, en cas de panne).

La détection d'une erreur de transmission (dans le transcodeur ou la station de base) comprend les étapes suivantes :
- lorsque trois défauts de synchronisation consécutifs ont été détectés, une temporisation d'une seconde est mise en action ;
- lorsque la temporisation est écoulée et que le fonctionnement reste mauvais, il y "détection d'une erreur de transmission".

Un défaut de synchronisation est détecté par analyse de la trame GSM.

En effet, une trame GSM comprend systématiquement, après un en-tête constitué de 16 zéros, puis de 16 bits de contrôle, un bit de synchronisation valant 1 tous les 16 bits. Si un bit de synchronisation reçu ne vaut pas 1, il y a détection d'un défaut de synchronisation.

L'invention repose sur le transfert de toutes les décisions d'interruption de communication dans la station de base. Le transcodeur ne prend jamais de lui-même une décision d'interruption lorsqu'il détecte des erreurs.

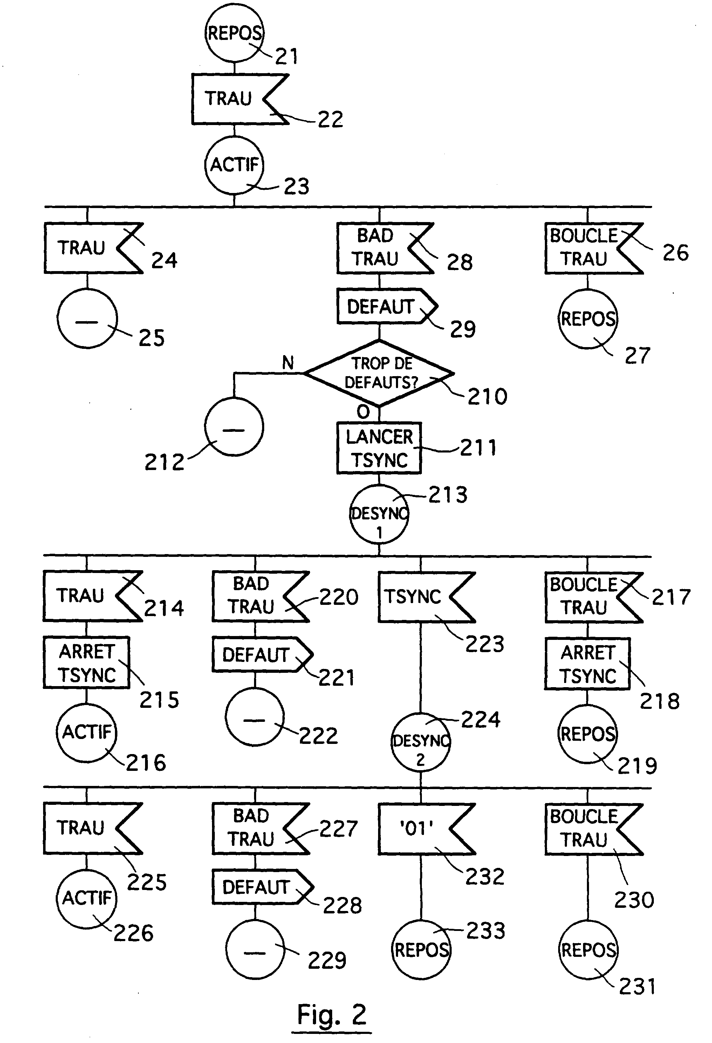

Le schéma de la figure 2 illustre le fonctionnement du transcodeur selon l'invention.

En l'absence de communication, le transcodeur se trouve au repos 21. Lorsqu'il reçoit (22) une trame "TRAU" (c'est-à-dire une trame comprimée par la station de base), il passe dans le mode actif 23. Le transcodeur est "esclave" de la station de base : c'est cette dernière qui l'informe d'un début de communication. Le transcodeur ne prend pas l'initiative d'une communication.

Trois cas peuvent alors se présenter :
- réception 24 de trame sans erreur (TRAU) : le transcodeur reste dans le mode actif 25 ;
- réception 26 de la trame que le transcodeur vient d'émettre (boucle TRAU), le contrôleur renvoyant les trames émises : le transcodeur retourne au mode repos 27 ;
- réception 28 d'une trame présentant une erreur de synchronisation (bad TRAU) : émission systématique 29 d'une information d'erreur vers la station de base, sans interruption de l'émission du signal utile.

Après l'émission 29 d'une information d'erreur, on considère (210) le nombre de défauts consécutifs. Si il y a trop de défauts (en pratique : s'il y a plus de trois erreurs consécutives), une temporisation est lancée (211). Sinon, on reste dans le mode actif 212.

Cette temporisation a une durée T_{synch} par exemple égale à 1 seconde. Tant que cette temporisation est en cours (213), (étape appelée DESYNC1, pour "désynchronisation-phase 1), les trois situations déjà décrites peuvent se présenter :
- réception 214 d'une trame sans erreur (TRAU) : la temporisation est interrompue 215 (arrêt T_{synch}), et l'on revient au mode actif 216 ;
- réception 217 de la trame que le transcodeur vient d'émettre (boucle TRAU) : la temporisation est interrompue (218), et le transcodeur passe dans le mode "repos" 211 ;
- réception 220 d'une trame présentant une erreur de synchronisation : une nouvelle information d'erreur est émise (221), et la temporisation suit son cours (222).

A la fin de la temporisation (réception 223 de l'information T_{synch} écoulée), le transcodeur passe à la seconde phase de la désynchronisation (DESYNC2) 224.

On peut alors rencontrer quatre situations :
- réception 225 d'une trame sans erreur : retour dans le mode actif 226 ;
- réception 227 d'une trame présentant une erreur de synchronisation : émission 228 d'une information de défaut, et maintien dans l'état en cours 229 (le transcodeur continue à émettre des données) ;
- réception 230 de la trame que le transcodeur vient d'émettre (boucle TRAU) : le transcodeur passe dans le mode "repos" 231 ;
- réception 232 d'une série de données de bourrage "01" : le transcodeur passe dans le mode "repos" 233. Il est à noter que les données de bourrage ne sont prises en compte que lorsque la temporisation T_{synch} est écoulée.

Ainsi, le transcodeur ne prend jamais de lui-même la décision de cesser d'émettre : il ne passe dans le mode "repos" uniquement lorsque le contrôleur BSC lui retourne ses propres trames ou lorsqu'il reçoit des données de bourrage ("idle pattern"). En revanche, dès qu'une erreur est détectée, le transcodeur en informe la station de base.

La gestion des erreurs de synchronisation est donc centralisée dans la station de base, le transcodeur se limitant à indiquer à la station de base ses problèmes.

L'information d'erreur de synchronisation peut par exemple être transmise à la station de base en utilisant un ou plusieurs des bits de contrôle disponibles dans chaque trame "TRAU", tels que les bits C12 à C15 (selon la numérotation retenue dans le document de normalisation GSM 08.60), et par exemple le bit de contrôle C12.

La figure 3 présente schématiquement le fonctionnement de la station de base associée au transcodeur selon l'invention.

Les trames 31 reçues du transcodeur, sont tout d'abord décomposées 32 de façon à extraire notamment les différents bits de contrôle. Si le bit C12 vaut un (erreur détectée par le transcodeur), une information d'incrémentation 33 est transmise à un premier compteur 34, comptabilisant donc les erreurs de synchronisation vues par le transcodeur.

Par ailleurs, les données reçues 35 sont analysées (36) de façon à extraire les données 37 (en vue de les transmettre au mobile). Par ailleurs, les erreurs de synchronisation sont détectées, et une information d'incrémentation 38 est transmise à un second compteur 39, lorsqu'une erreur est détectée.

Une étape 310 de contrôle des erreurs de transmission tient compte du nombre 311 d'erreurs vues par le transcodeur d'une part, et du nombre d'erreurs 312 vues par la station de base.

En fonction d'une analyse spécifique de ces deux valeurs 311 et 312, et d'une valeur de temporisation T_{synch} 313, cette étape de contrôle des erreurs 310 décide, si cela est nécessaire, d'alerter le contrôleur BSC afin qu'il coupe la communication. Un ordre correspondant de fin de communication 314 est alors généré.

Avantageusement, la valeur de temporisation T_{synch} est paramétrable. Elle peut par exemple être téléchargée dans les stations de base. Pour un PCM de bonne qualité, T_{synch} peut être égal à 1 seconde. En revanche, il sera préférentiellement plus long si les lignes PCM sont de qualité moyenne.

Eventuellement, les valeurs T_{synch} peuvent varier d'une station de base à l'autre, dans un même réseau, en fonction des conditions locales, de statistiques, etc...

Ainsi, l'invention présente notamment les avantages suivants :
- le transcodeur n'a plus à interrompre l'émission lorsqu'il détecte des erreurs ;
- la valeur T_{synch} est paramétrable (et peut être téléchargée) ;
- aucune modification n'est nécessaire dans les transcodeurs, même lorsque la valeur de T_{synch} est modifiée ;
- la gestion des erreurs est centralisée.

## Revendications

1. Procédé de gestion des erreurs de transmission entre une station de base (17) et un transcodeur (16), dans un système de radiocommunication numérique avec des mobiles, ledit système comprenant une pluralité de stations de base contrôlant chacune une pluralité de mobiles par voie hertzienne,
un signal transitant entre un mobile (11) et un terminal distant (12), sens montant :
- dudit mobile (11) vers une station de base (17), par voie hertzienne,
- de ladite station de base (17) vers un transcodeur (16), sous la forme de trames de données comprenant des données de contrôle et des données utiles, lesdites données utiles étant codées selon un codage connu de ladite station de base (17) et dudit transcodeur (16),
- dudit transcodeur (16) vers un centre de commutation (14) assurant la connexion avec ledit terminal distant (12),
et symétriquement dudit terminal distant (12) vers ledit mobile (11), sens descendant , caractérisé en ce que ledit transcodeur (16) effectue les opérations suivantes :
- réception et décodage (22, 24, 28, 214, 220, 225, 227) des trames transmises par ladite station de base (17) ;
- détection (28, 220, 227) des erreurs de transmission dans le sens montant, par analyse des trames reçues et décodées ; et
- en présence d'une erreur de transmission dans le sens montant, insertion (29, 221, 228) systématique d'un message d'erreur dans une trame destinée à ladite station de base (17), sans interruption de l'émission de données utiles vers ladite station de base (17); et
- interruption (27, 219, 231, 233) de l'émission de données vers ladite station de base (17), sur détection (26, 217, 230, 232) d'une demande d'interruption (314) de l'émission dans le sens montant générée par ladite station de base (17) ;
et en ce que ladite station de base (17) effectue les opérations suivantes :
- réception et décodage (32, 36) des trames transmises par ledit transcodeur ;
- détection (36) des erreurs de transmission (38) dans le sens descendant, par analyse des trames reçues et décodées ;
- interruption de l'émission de données vers ledit transcodeur et génération (310) d'une demande d'interruption (314) de l'émission dans le sens montant, lorsque les erreurs de transmission détectées dans le sens descendant (312) et/ou signalées par un message d'erreur dans le sens montant (311) remplissent des conditions prédéterminées.

2. Procédé selon la revendication 1, caractérisé en ce que ladite opération de détection d'erreurs (28, 220, 227, 36) comprend une étape de détection de perte de synchronisation dans lesdites données reçues et décodées.

3. Procédé selon l'une quelconque des revendications 1 et 2, caractérisé en ce que ladite opération d'insertion (29, 221, 228) d'un message d'erreur consiste à modifier la valeur d'au moins un élément binaire de contrôle d'une desdites trames.

4. Procédé selon la revendication 3, caractérisé en ce que ledit élément binaire est un des éléments C12 à C15 de la trame GSM.

5. Procédé selon l'une quelconque des revendications 1 à 4, caractérisé en ce que ladite station de base (17) met en oeuvre deux compteurs (34, 39), un premier compteur (34) comptabilisant le nombre (311) d'erreurs dans le sens montant sur un premier laps de temps prédéterminé (313), et un second compteur (39) comptabilisant le nombre (312) d'erreurs dans le sens descendant sur un second laps de temps prédéterminé (313), et en ce que ladite station de base (17) décide l'interruption (314) d'une communication lorsque la valeur de l'un au moins desdits compteurs (34, 39) dépasse un seuil prédéterminé.

6. Procédé selon la revendication 5, caractérisé en ce que ledit premier et/ou ledit second laps de temps prédéterminés (313) ont des durées paramétrables.

7. Procédé selon la revendication 6, caractérisé en ce que ladite durée paramétrable est différente pour chaque station de base (17), qu'elles soient ou non contrôlées par un même contrôleur BSC.

8. Procédé selon l'une quelconque des revendications 1 à 7, caractérisé en ce que ledit transcodeur (16) effectue les opérations suivantes :
- comptage (210) du nombre d'erreurs apparaissant dans un troisième laps de temps prédéterminé ;
- activation (211) d'une horloge d'alarme, lorsque ledit nombre d'erreurs est supérieur à un seuil prédéterminé ; et
- interruption (233) de la communication, si ladite horloge d'alarme atteint (223) une valeur de temporisation prédéterminé et si ledit transcodeur (16) reçoit (232) un message d'interruption de la communication.

9. Transcodeur mettant en oeuvre le procédé selon l'une quelconque des revendications 1 à 8, caractérisé en ce qu'il comprend des moyens de détection d'une erreur de transmission dans un signal émis par une station de base, et des moyens d'émission d'un message vers ladite station de base, sans interruption de l'émission de données utiles.

10. Station de base mettant en oeuvre le procédé selon l'une quelconque des revendications 1 à 8, caractérisé en ce qu'il comprend des moyens (34, 39) de comptage d'une part des erreurs détectées dans les données émises par ledit transcodeur, et d'autre part des erreurs signalées par un message d'erreur émis par ledit transcodeur.

## Patentansprüche

1. Verfahren zur Behandlung von Fehlern bei der Übertragung zwischen einer Basisstation (17) und einem Transcoder in einem digitalen Mobilfunksystem, das mehrere je eine Mehrzahl von Mobilfunkteilnehmer über Funk kontrollierende Basisstationen enthält,
wobei ein Signal zwischen einem Mobilfunkteilnehmer (11) und einem entfernten Endgerät (12) in aufsteigender Richtung
- vom Mobilfunkteilnehmer (11) zu einer Basisstation (17) per Funk übertragen wird,
- dann von der Basisstation (17) zu einem Transcoder (16) in Form von Datenrahmen mit Kontrolldaten und Nutzdaten übertragen wird, wobei die Nutzdaten gemäß einer der Basisstation (17) und dem Transcoder (16) bekannten Kodierung verschlüsselt sind,
- und schließlich vom Transcoder (16) zu einer Vermittlungszentrale (14) übertragen wird, die die Verbindung zu dem fernen Teilnehmer (12) herstellt,
sowie symmetrisch in absteigender Richtung vom fernen Teilnehmer (12) zum Mobilfunkteilnehmer (11),
dadurch gekennzeichnet, daß der Transcoder (16) die folgenden Operationen durchführt:
- Empfang und Dekodierung (22, 24, 28, 214, 220, 225, 227) der von der Basisstation (17) übermittelten Rahmen,
- Erfassung (28, 220, 227) der Übertragungsfehler in aufsteigender Richtung durch Analyse der empfangenen und dekodierten Rahmen,
- und systematische Einfügung (29, 221, 228) einer Fehlernachricht in einen für die Basisstation (17) bestimmten Rahmen ohne Unterbrechung der Aussendung von Nutzdaten zur Basisstation (17), wenn ein Übertragungsfehler in aufsteigender Richtung erfaßt worden ist,
- und Abbruch (27, 219, 231, 233) der Datenaussendung zur Basisstation (17) bei Empfang (26, 217, 230, 232) eines von der Basisstation (17) erzeugten Befehls (314) zum Abbruch der Aussendung,
und daß die Basisstation (17) die folgenden Operationen durchführt:
- Empfang und Dekodierung (32, 36) der vom Transcoder übermittelten Rahmen,
- Erfassung (36) der Übertragungsfehler (38) in absteigender Richtung durch Analyse der empfangenen und dekodierten Rahmen,
- Abbruch der Aussendung von Daten zum Transcoder und Erzeugung (310) eines Befehls zum Abbruch (314) der Aussendung durch den Transcoder, wenn die in absteigender Richtung erfaßten (312) und/oder die durch eine Fehlermeldung gemeldeten Fehler (311) der Übertragung in aufsteigender Richtung bestimmte Bedingungen erfüllen.

2. Verfahren nach Anspruch 1, dadurch gekennzeichnet, daß der Verfahrensschritt der Fehlererfassung (28, 220, 227, 36) einen Schritt der Erfassung des Synchronisationsverlusts in den empfangenen und dekodierten Daten enthält.

3. Verfahren nach einem beliebigen der Ansprüche 1 und 2, dadurch gekennzeichnet, daß der Verfahrensschritt der Einfügung einer Fehlernachricht (29, 221, 228) darin besteht, den Wert mindestens eines Kontrollbinärelements eines der Rahmen zu verändern.

4. Verfahren nach Anspruch 3, dadurch gekennzeichnet, daß das Binärelemente eines der Binärelemente C12 bis C15 des GSM-Rahmens ist.

5. Verfahren nach einem beliebigen der Ansprüche 1 bis 4, dadurch gekennzeichnet, daß die Basisstation (17) zwei Zähler (34, 39) verwendet, wobei der erste Zähler (34) die Anzahl (311) von Fehler in aufsteigender Richtung während einer ersten vorgegebenen Zeitspanne (313) summiert und der zweite Zähler (39) die Anzahl (312) von Fehlern in absteigender Richtung während einer zweiten vorgegebenen Zeitspanne (313) addiert, und daß die Basisstation (17) den Abbruch (314) einer Nachrichtenverbindung beschließt, wenn der Wert mindestens eines der Zähler (34, 39) einen vorbestimmten Schwellwert überschreitet.

6. Verfahren nach Anspruch 5, dadurch gekennzeichnet, daß die erste und/oder die zweite vorbestimmte Zeitspanne (313) durch Parameter bestimmt werden.

7. Verfahren nach Anspruch 6, dadurch gekennzeichnet, daß die Dauer dieser Parameter für jede Basisstation (17) eine andere ist, und zwar unabhängig davon, ob sie von einem gemeinsamen Basisstations-Kontrollorgan überwacht werden oder nicht.

8. Verfahren nach einem beliebigen der Ansprüche 1 bis 7, dadurch gekennzeichnet, daß der Transcoder (16) die folgende Operationen durchführt:
- Zählen (210) der Anzahl von Fehlern, die in einer dritten vorgegebenen Zeitspanne auftreten,
- Aktivierung (211) einer Alarmuhr, wenn die Anzahl von Fehlern über einem vorbestimmten Schwellwert liegt,
- und Abbruch (233) der Nachrichtenverbindung, wenn die Alarmuhr einen vorbestimmten Zeitdauerwert erreicht (223) und wenn der Transcoder (16) einen Befehl betreffend den Abbruch der Verbindung empfängt (232).

9. Transcoder zur Durchführung des Verfahrens nach einem beliebigen der Ansprüche 1 bis 8, dadurch gekennzeichnet, daß er Mittel zur Erfassung eines Übertragungsfehlers in einem von einer Basisstation ausgesendeten Signal sowie Mittel zur Aussendung einer Nachricht an die Basisstation ohne Unterbrechung der Aussendung von Nutzdaten aufweist.

10. Basisstation zur Durchführung des Verfahrens nach einem beliebigen der Ansprüche 1 bis 8, dadurch gekennzeichnet, daß sie Mittel (34, 39) aufweist, die einerseits die in den vom Transcoder ausgesendeten Daten erfaßten Fehler und andererseits die in einer vom Transcoder ausgesendeten Fehlernachricht gemeldeten Fehler zählen.

## Claims

1. A method of managing transmission errors between a base station (17) and a transcoder (16), in a digital radiocommunications system for mobile stations, said system comprising a plurality of base stations, each of which controls a plurality of mobile stations via radio links;
a signal from a mobile station (11) to a remote terminal (12) (up direction) being conveyed:
from said mobile station (11) to a base station (17) via a radio link;
from said base station (17) to a transcoder (16) in the form of data frames containing check data and useful data, said useful data being encoded by using encoding that is recognized by said base station (17) and by said transcoder (16); and
from said transcoder (16) to a switching center (14) establishing connection to said remote terminal (12); and
a signal from said remote terminal (12) to said mobile station (11) (down direction) being conveyed symmetrically;
said method being characterized in that said transcoder (16) performs the following operations:
receiving and decoding (22, 24, 28, 214, 220, 225, 227) the frames transmitted by said base station (17);
detecting (28, 220, 227) transmission errors in the up direction by analyzing the received and decoded frames;
in the presence of a transmission error in the up direction, systematically inserting (29, 221, 228) an error message in a frame addressed to said base station (17) without interrupting useful data transmission to said base station (17); and
interrupting (27, 219, 231, 233) data transmission to said base station (17) on detection (26, 217, 230, 232) of an up-direction transmission interruption request (314) generated by said base station (17);
and in that said base station (17) performs the following operations:
receiving and decoding (32, 36) frames transmitted by said transcoder;
detecting (36) transmission errors (38) in the down direction by analyzing the received and decoded frames; and
interrupting data transmission to said transcoder and generating (310) an up-direction transmission interruption request (314) when the transmission errors detected in the down direction (312) and/or reported by an error message in the up direction (311) satisfy predetermined conditions.

2. A method according to claim 1, characterized in that said operation of detecting errors (28, 220, 227, 36) includes a step of detecting synchronization loss in said received and decoded data.

3. A method according to claim 1 or 2, characterized in that said operation of inserting (29, 221, 228) an error message consists in changing the value of at least one check bit of one of said frames.

4. A method according to claim 3, characterized in that said bit is any one of bits C12 to C15 in the GSM frame.

5. A method according to any one of claims 1 to 4, characterized in that said base station (17) uses two counters (34, 39), a first counter (34) counting the number (311) of errors in the up direction during a first predetermined lapse of time (313), and a second counter (39) counting the number (312) of errors in the down direction during a second predetermined lapse of time (313);
and in that said base station (17) decides to interrupt (314) a call when the value of at least one of said counters (34, 39) exceeds a predetermined threshold.

6. A method according to claim 5, characterized in that said first predetermined lapse of time (313) and/or said second predetermined lapse of time (313) have parameterizable durations.

7. A method according to claim 6, characterized in that said parameterizable duration is different for each base station (17), regardless of whether or not the base stations are controlled by the same base station controller (BSC).

8. A method according to any one of claims 1 to 7, characterized in that said transcoder (16) performs the following operations:
counting (210) the number of errors that appear during a third predetermined lapse of time;
activating (211) an emergency clock when said number of errors is greater than a predetermined threshold; and
interrupting (233) the call if said emergency clock reaches (223) a predetermined time-delay value, and if said transcoder (16) receives (232) a call interruption message.

9. A transcoder implementing the method according to any one of claims 1 to 8, said transcoder being characterized in that it includes detection means for detecting a transmission error in a signal transmitted by a base station, and transmission means for transmitting a message to said base station without interrupting useful data transmission.

10. A base station implementing the method according to any one of claims 1 to 8, characterized in that it includes counting means (34, 39) for counting firstly the errors detected in the data transmitted by said transcoder, and secondly the errors reported by an error message transmitted by said transcoder.
